## Europäisches Patentamt

## European Patent Office

## Office européen des brevets

(19)

(11) Veröffentlichungsnummer: **0 090 772**
**A2**

(12) # EUROPÄISCHE PATENTANMELDUNG

(21) Anmeldenummer: **83810117.8**

(22) Anmeldetag: **23.03.83**

(51) Int. Cl.³: **B 27 B 29/04**

(30) Priorität: **25.03.82 PT 74659**

(43) Veröffentlichungstag der Anmeldung: **05.10.83**
**Patentblatt 83/40**

(84) Benannte Vertragsstaaten: **AT BE CH DE FR GB IT LI LU NL SE**

(71) Anmelder: **Abreu, Alfredo Ferreira de, Lugar de Valdeirigo, P-4785 Trofa (PT)**

(72) Erfinder: **Abreu, Alfredo Ferreira de, Lugar de Valdeirigo, P-4785 Trofa (PT)**

(74) Vertreter: **Schweizer, Hans et al, Bovard AG Patentanwälte VSP Optingenstrasse 16, CH-3000 Bern 25 (CH)**

(54) **Holzsägemaschine mit einem Laufwagen zum Aufnehmen eines zu sägenden Holzblockes.**

(57) Der Laufwagen (7) ist längs einer Führungsschiene (6) auf einem horizontalen Stützrahmen (4) verschiebbar angeordnet. Mehrere in einem Schnittgatter (28) eingespannte Sägeblätter (25) werden von Schwungrädern (72) über Pleuelstangen (30) auf und ab bewegt. Zum Bewegen des Laufwagens und damit eines auf demselben eingespannten Holzstückes (12) gegen die sich abwärts bewegenden Sägeblätter dient eine hydraulische Vorschubeinrichtung. Diese Vorschubeinrichtung umfasst eine Kolbenpumpe (39) und einen damit verbundenen hydraulischen Antriebszylinder (22). Der Kolben der Kolbenpumpe ist über eine Pleuelstange (37) und einen Exzenter (35) mit der Welle (33) der Schwungräder wirkverbunden. Die Kolbenstange des Antriebszylinders ist direkt mit dem Laufwagen verbunden. Mit dieser Anordnung wird das Holzstück mit einer zur Geschwindigkeit der Sägeblätter (29) proportionalen Geschwindigkeit auf die sich abwärts bewegenden Sägeblätter zu bewegt. Während der Aufwärtsbewegung der Sägeblätter sind diese unbelastet. Dieser Umstand ermöglicht es, wesentlich dünnere Sägeblätter zu verwenden, als dies bisher der Fall war. Die Verwendung von dünneren Sägeblättern ergibt weniger Holzabfall in Form von Sägemehl.

## HOLZSAEGEMASCHINE MIT EINEM LAUFWAGEN ZUM AUFNEHMEN EINES ZU SAEGENDEN HOLZBLOCKES

Die Erfindung betrifft eine Holzsägemaschine gemäss dem Oberbegriff des Patentanspruches 1.

Bei den bekannten Holzsägemaschinen mit einem Laufwagen zum Aufnehmen eines zu sägenden Holzblockes und einem mehrere Sägeblätter aufweisenden Schnittgatter werden die zu sägenden Holzstücke mittels sog. Einzugwalzen stetig gegen die Sägeblätter hin bewegt. Das Auf- und Abbewegen des Schnittgatters erfolgt über durch einen Motor angetriebene Schwungräder, an denen exzentrisch Pleuelstangen angeordnet sind, deren andere Enden mit dem Schnittrahmen schwenkbar verbunden sind. Die Sägeblätter werden daher vom oberen Totpunkt zum unteren Totpunkt nicht mit gleichbleibender Geschwindigkeit bewegt. Die Geschwindigkeit ist am oberen und am unteren Totpunkt gleich Null und steigt bis zur Mittelstellung zwischen den beiden Totpunkten auf einen maximalen Wert an, um danach wieder auf Null abzusinken. Der Betrieb solcher bekannten Sägemaschinen ist nur möglich, wenn relativ dicke Sägeblätter, bis zu 4 mm, verwendet werden. Das Benützen von dicken Sägeblättern hat aber den Nachteil, dass einerseits viel Energie zum Antreiben der Sägeblätter notwendig ist und andererseits, dass relativ viel Holz in Sägemehl umgewandelt wird.

Es ist Aufgabe der Erfindung, eine Holzsägemaschine der eingangs genannten Art zu schaffen, die es ermöglicht, dünnere Sägeblätter zu verwenden, als dies bei bekannten Sägemaschinen der Fall ist, wodurch weniger Holzverluste auftreten.

Die erfindungsgemässe Sägemaschine ist durch die im kennzeichnenden Teil des Patentanspruches 1 angeführten Merkmale gekennzeichnet.

Der Erfindungsgegenstand ist nachstehend mit Bezugnahme auf die Zeichnung beispielsweise näher erläutert. Es zeigen

Fig. 1 die schaubildliche Darstellung eines Ausführungsbeispieles der erfindungsgemässen Holzsägemaschine, teilweise im Schnitt,

Fig. 2 das hydraulische System der in der Fig. 1 dargestellte Sägemaschine in schaubildlicher Darstellung,

Fig. 3 einen Teil der Sägemaschine gemäss der Fig. 1 in schaubildlicher Darstellung und teilweise im Schnitt,

Fig. 4 den unteren Teil der Sägemaschine gemäss der Fig. 1 in schaubildlicher Darstellung und teilweise im Schnitt und

Fig. 5 die Seitenansicht eines im Hydrauliksystem gemäss der Fig. 2 verwendeten Ventils, teilweise im Schnitt.

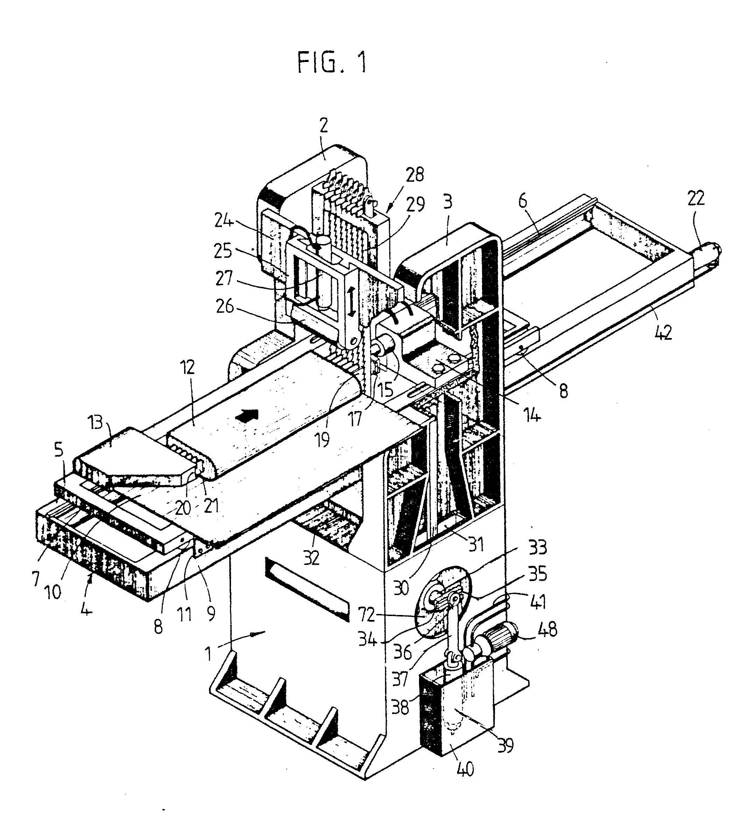

Das in der Fig. 1 schaubildlich dargestellte Ausführungsbeispiel der erfindungsgemässen Holzsägemaschine besitzt ein Maschinengestell 1, mit sich nach oben erstreckenden Seitenteilen 2 und 3. Zwischen den beiden Seitenteilen 2 und 3 ist ein in einer horizontalen Ebene liegender Stützrahmen 4 starr angeordnet, dessen Endbereiche über das Maschinengestell 1 vorstehen. Auf dem bezogen auf die Fig. 1 linken Längsrahmenteil 5 des Stützrahmens 4 ist eine stabförmige Führungsschiene 6 angeordnet. Längs der Führungsschiene 6 ist ein wabenförmiger Laufwagen 7 verfahrbar, der zu diesem Zweck mit nicht sichtbaren Spurkranzrollen zum Umfassen der Führungsschiene 6 und mit gewöhnlichen Laufrollen 8 zum Abrollen auf dem Längsrahmenteil 9 des Stützrahmens 4 versehen ist.

Oberhalb des Laufwagens 7 ist eine Stützplatte 11 angeordnet, die über Montagewinkel 11, von denen nur einer sichtbar ist, mit dem Längsrahmenteil 9 des Stützrahmens 4 starr verbunden ist. Die Stützplatte 10 dient zur Auflage eines zu sägenden Holzstückes 12. In dem einen Endbereich des Laufwagens 7 ist eine Anschlagplatte 13 angeordnet, von der ein Teil die Stützplatte 10 überragt. Im anderen Endbereich des Laufwagens 7 befindet sich ein Lagerbock 14, der lösbar mit dem Laufwagen 7 verbunden ist, so dass der Abstand zwischen dem Lagerbock 14 und der Anschlagplatte 13 einstellbar ist. Im Lagerbock 14 ist ein hydraulischer Antriebszylinder 15 gehalten, und an dem aus dem Antriebszylinder 15 herausragenden Ende einer Kolbenstange 16 ist ein Querstück 17 mit einer hinterschnittenen Nut 18 befestigt. In die Nut 18 ist ein kammförmiger Halter 19 zum Halten des Holzstückes 12 bzw. der gesägten Teile desselben eingesetzt. An der dem Lagerbock 14 gegenüberliegenden Stirnseite der Anschlagplatte 13 ist eine hinterschnittene Nut 20 vorhanden, in die ein ebenfalls kammförmiger Halter 21 zum Halten des Holzstückes 12 bzw. der gesägten Teile desselben, eingesetzt ist.

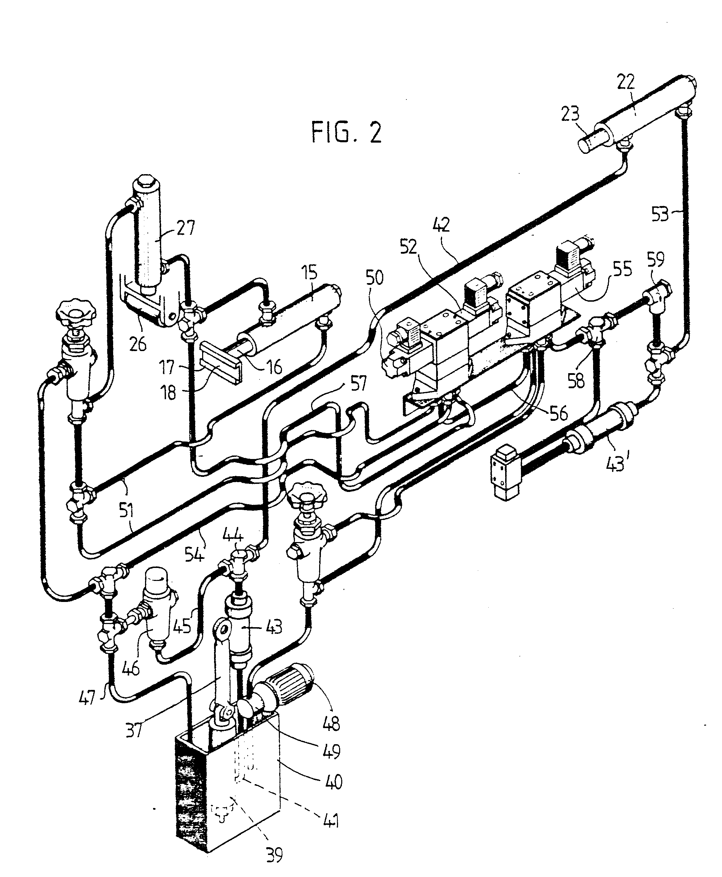

Am hinteren Ende des Stützrahmens 4 ist ein hydraulischer Antriebszylinder 22 angeordnet, dessen in der Fig. 1 nicht sichtbare Kolbenstange 23 (siehe Fig. 2) mit dem Laufwagen 7 verbunden ist. Der Antriebszylinder 23 dient zum Verschieben des Laufwagens 7 während dem Sägevorgang.

Die oberen Endbereiche der Seitenteile 2 und 3 des Maschinengestelles 1 sind durch eine Querplatte 24 miteinander verbunden. Längs einer Führung der Querplatte 24 ist ein Schlitten 25 in vertikaler Richtung verschiebbar angeordnet. Am unteren Ende des Schlittens 25 ist eine Anpresswalze 26 gelagert. Mit Hilfe eines hydraulischen Antriebszylinders 27 kann die Anpresswalze 26 das Holzstück 12 gegen die Stützplatte 10 anpressen, damit sich das Holzstück 12 während dem Sägevorgang nicht auf und ab bewegen kann.

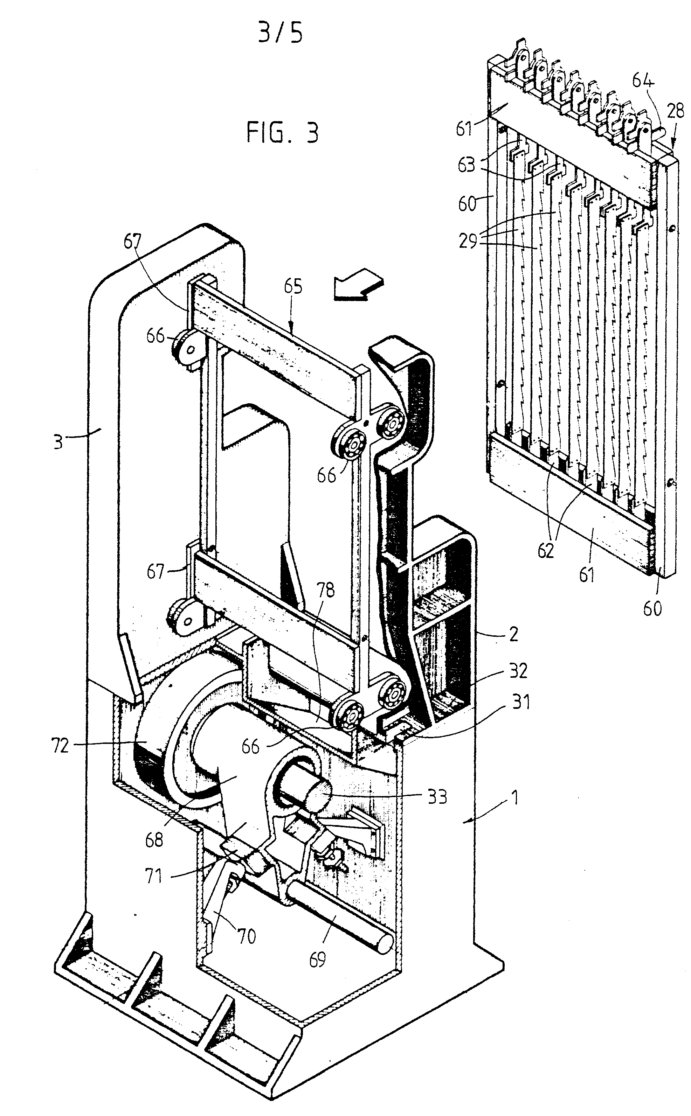

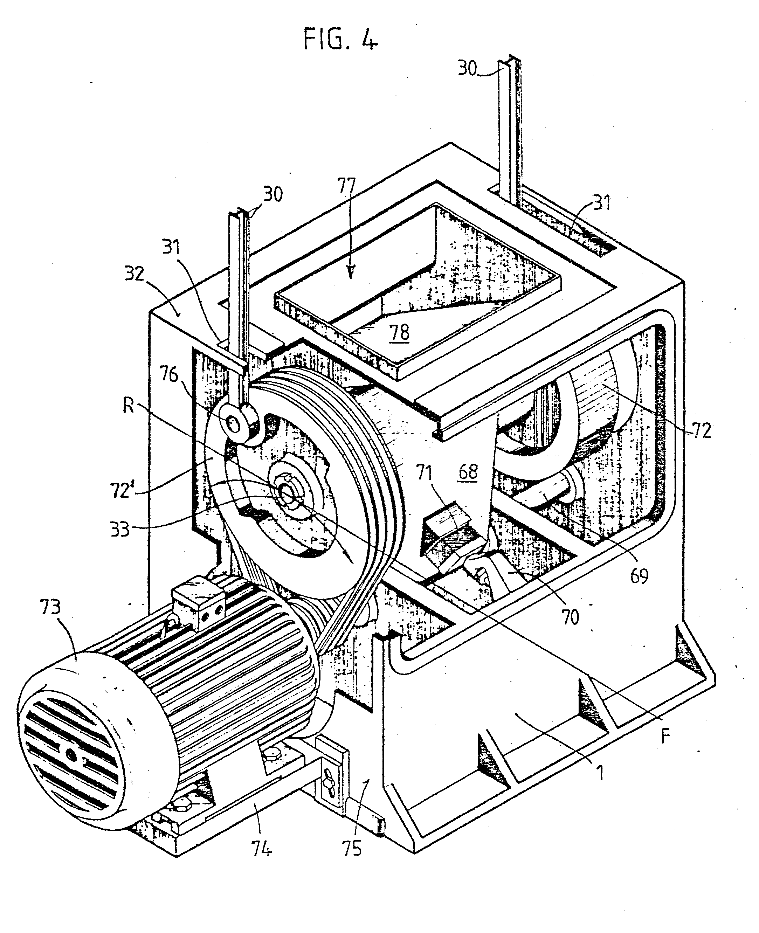

Zwischen den Seitenteilen 2 und 3 des Maschinengestelles 1 und hinter der Querplatte 24 ist ein Schnittgatter 28 auf eine weiter unten mit Bezugnahme auf die Fig. 3 näher beschriebene Weise auf- und abbewegbar gelagert. Das Schnittgatter 28 weist mehrere Sägeblätter 29 auf, die zueinander und bezüglich der Bewegungsrichtung des Schnittgatters parallel ausgerichtet sind. Das Schnittgatter 28 wird durch zwei Pleuelstangen 30, von denen in der Fig. 1 nur eine teilweise sichtbar ist, auf und ab bewegt. Die Pleuelstangen 30 erstrecken sich durch je einen Schlitz 31 in der Deckplatte 32 des Maschinengestelles 1. Die Antriebsweise der Pleuelstangen 30 ist weiter unten mit Bezugnahme auf die Fig. 4 näher beschrieben.

Im Innern des Maschinengestelles 1 ist eine Welle 33 auf eine weiter unten mit Bezug auf die Fig. 3 beschriebene Weise gelagert. An einem Ende der Welle 33 ist ein Exzenter in der Form eines mit einer Nut 34 versehenen Balkens 35 befestigt. In der Nut 34 ist ein Lager 36 einer Pleuelstange 37 fest angeordnet. Das andere Ende der Pleuelstange 37 ist schwenkbar mit der Kolbenstange 38 einer Kolbenpumpe 39 verbunden. Der untere Teil der Kolbenpumpe 39 ist in ein Hydrauliköl eingetaucht, das sich in einem Behälter 40 befindet. Der Ausgang der Kolbenpumpe 39 ist an eine Oelleitung 41 angeschlossen. Durch Einstellen der Distanz zwischen dem Zentrum der Welle 33 und dem Zentrum des Lagers 36 kann der Hub der Kolbenpumpe eingestellt werden.

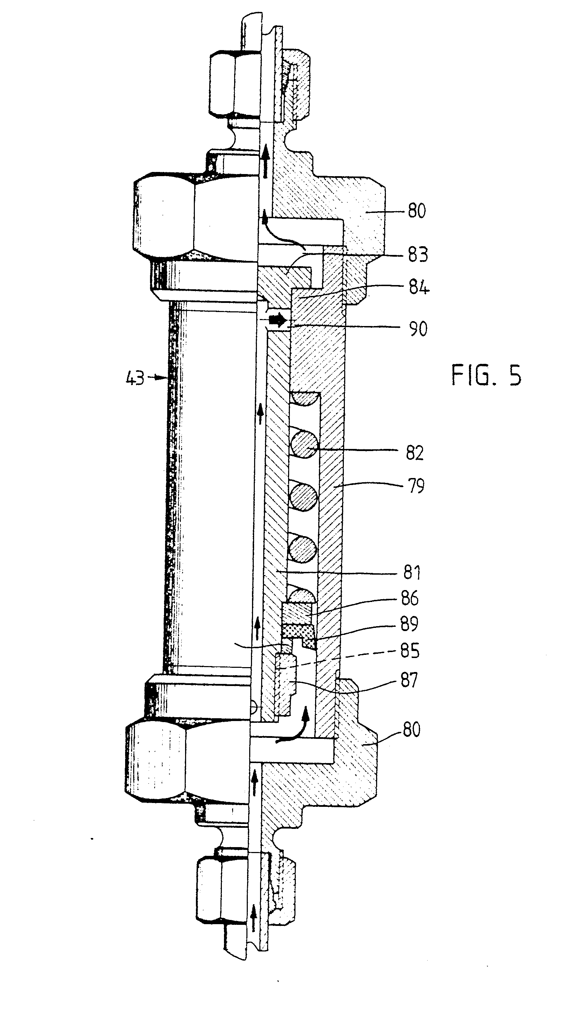

Die Fig. 2 zeigt in schematischer und schaubildlicher Darstellung das hydraulische System der Maschine gemäss der Fig. 1. Das von der Kolbenpumpe 39 in Abhängigkeit der Umdrehungen der Welle 32 stossweise geförderte Hydrauliköl gelangt über die Oelleitung 41 und eine weitere Oelleitung 42 zum Antriebszylinder 22, welcher dem Laufwagen 7 die Vorschubbewegung erteilt. Vorzugsweise ist zwischen die beiden Oelleitungen 41 und 42 ein weiter unten mit Bezugnahme auf die Fig. 5 näher beschriebenes Steuerventil 43 eingesetzt. Falls sich der Antriebszylinder 22 bezüglich der Fig. 1 in der hinteren Endstellung befindet, gelangt das von der Kolbenpumpe 39 geförderte Oel über eine Zweigstelle 44, eine Oelleitung 45, ein Ueberdruckventil 46 und eine Rückführleitung 47 zurück in den Behälter 40.

Das zum Betrieb des Antriebszylinders 15 zum Einspannen des Holzstückes 12 und des Antriebszylinders 27 zum Pressen des Holzstückes 12 gegen die Stützplatte 10 benötigte Oel wird von einer durch einen Elektromotor 48 angetriebenen Förderpumpe 48 geliefert.

Unterhalb der Stützplatte 10 ist ein nicht dargestellter Mikroschalter angeordnet, der automatisch betätigt wird, wenn das Holzstück 12 auf die Stützplatte 10 gelegt wird. Der Mikroschalter steuert ein Magnetventil 50, welches über eine Oelleitung 51 das von der Förderpumpe 49 gelieferte Drucköl dem Antriebszylinder 15 zuleitet, damit das Holzstück 12 zwischen den genannten kammförmigen Haltern 19 und 20 eingeklemmt wird. Durch das Verschieben des Querstückes 17 durch den Antriebszylinder 15 wird ein weiterer nicht dargestellter Mikroschalter betätigt, der ein zusätzliches Magnetventil 52 steuert. Das erregte Magnetventil 52 lässt von der Förderpumpe 49 geliefertes Oel in den Antriebszylinder 27 eintreten, wodurch die Anpresswalze 26 auf das Holzstück 12 abgesenkt wird.

Das Magnetventil 52 ist ein Doppelventil, wobei der zweite Ventilteil in der Ausgangsleitung 53 des Antriebszylinders 23 angeordnet ist. Der zweite Ventilteil wird gleichzeitig mit dem ersten Ventilteil betätigt, so dass der Arbeitszylinder 22 von diesem Zeitpunkt an den Laufwagen 7 bewegen kann. Das am Ausgang des Antriebszylinders 77 austretende Oel wird über die genannte Ausgangsleitung 53, den offenen zweiten Ventilteil des Magnetventils 52, eine Oelleitung 54 und die Rückführleitung 47 in den Behälter 40 zurückgeführt.

Am Ende der Vorschubbewegung des Laufwagens 7, d.h. wenn die Sägeblätter 29 das Holzstück 12 vollständig durchsägt haben und teilweise in den kammartigen Halter 21 hineinragen, wird ein nicht dargestellter Endschalter betätigt, der ein drittes Magnetventil 55 steuert. Das Erregen des Magnetventils 55 bewirkt, dass den Antriebszylindern 15 und 27 über Oelleitungen 56 und 57 von der Förderpumpe 49 gefördertes Oel zugeführt wird. Dies hat zur Folge, dass die Anpresswalze 26 angehoben und der kammartige Halter 19 von den gesägten einzelnen Teilen des Holzstückes 12 gelöst wird. Danach fallen die einzelnen Teile des Holzstückes durch den rahmenförmigen Laufwagen 7 und den Stützrahmen 4 hindurch nach unten.

Weiter bewirkt das Erregen des Magnetventils 55, dass von der Förderpumpe 49 geliefertes Oel über eine Zweigstelle 58, in der Durchlassöffnung durch ein Rückschlagventil 59 und die Ausgangsleitung 53 zum Antriebszylinder 22 gelangt, wodurch der Laufwagen 7 in relativ kurzer Zeit in seine Ausgangsstellung, d.h. in die in der Fig. 1 dargestellte Lage zurückversetzt wird. Danach kann ein weiteres Holzstück auf die Stützplatte 10 aufgesetzt werden und die oben beschriebenen Vorgänge wiederholen sich.

Die Fig. 3 zeigt einen Teil der Sägemaschine nach der Fig. 1 von der Rückseite her betrachtet, teilweise im Schnitt. Der besseren Uebersicht wegen ist das Schnittgatter 28 von der Maschine getrennt dargestellt. Das Schnittgatter 28 weist zwei Längsrahmenteile 60 auf, die durch Querrahmenteile 61 auf Abstand gehalten werden. Am unteren Querteil 61 sind Laschen 62 angebracht, an denen die Sägeblätter 29 eingehängt werden können. Der obere Rahmenteil 61 wird von Laschen 63 durchsetzt, in die die anderen Enden der Sägeblätter 29 eingehängt werden können. Zum Spannen der Sägeblätter 29 sind Teile 64 vorgesehen, die mit den über den oberen Querrahmenteil 61 vorstehenden Enden der Laschen 63 zusammenwirken.

Zwischen den Seitenteilen 2 und 3 des Maschinengestelles 1 ist ein auf und ab bewegbarer Rahmen 65 zum lösbaren Befestigen des Schnittgatters 28 angebracht. Zum Führen des Rahmens 65 in seiner vertikalen Bewegungsbahn sind in jedem Eckbereich des Rahmens 65 je zwei einander gegenüberliegende Rollen 66, z.B. Kugellager, drehbar gelagert. Auf der Innenseite der Seitenteile 2 und 3 sind vertikal angeordnete Schienen 67 befestigt, von denen sich jede zwischen zwei der genannten gegenüberliegenden Rollen 66 befindet. In der Fig. 1 sind nur jene Schienen 67 sichtbar, die auf der Innenseite des Seitenteiles 3 befestigt sind.

Innerhalb des Maschinengestelles 1 ist die weiter oben genannte Welle 33, welche die Kolbenpumpe 39 antreibt, in einem Lagerbock 68 gelagert. Der Lagerbock 68 seinerseits ist um eine Welle 69 schwenkbar angeordnet. Zwei durch Stützträger 70 gehaltene Kissen 71 gestatten lediglich, dass der Lagerbock 68 nur sehr begrenzt um die Welle 69 verschwenken kann. Auf jedes Ende der Welle 33 ist je ein Schwungrad 72 aufgesetzt, von denen in der Fig. 3 nur eines sichtbar ist.

Die Fig. 4 zeigt im wesentlichen nur das Maschinengestell 1 in schaubildlicher Darstellung und teilweise im Schnitt, sowie den Antrieb der Schwungräder 72, von denen das eine 72' als Keilriemenrad ausgebildet ist. Das Keilriemenrad wird durch einen Elektromotor 73 angetrieben, der auf einer Konsole 74 befestigt ist, die ihrerseits mit einer Seitenwand 75 des Maschinengestelles 1 starr verbunden ist. An einer exzentrisch bezüglich der Welle 33 angeordneten Stelle 76 der Schwungräder 72 und 72' ist je eine der weiter oben genannten Pleuelstangen 30 schwenkbar gelagert, wobei die anderen Enden der Pleuelstangen 30 auf nicht dargestellte Weise schwenkbar mit dem Rahmen 65 verbunden sind. Die Pleuelstangen 30 sind an der Umsetzung der Drehbewegung der Schwungräder 72 und 72' in eine lineare Hin- und Herbewegung des Rahmens 65 bzw. des Schnittgatters 28 beteiligt.

Die durch die Drehbewegung der Schwungräder 72 und 72' sowie die Hin- und Herbewegung des Schnittgatters 28 auftretenden Vibrationen werden durch die zwischen den Stützträgern 70 und dem Lagerbock 68 angeordneten plastischen Kissen 71 gedämpft.

Im mittleren Bereich der Deckplatte 32 des Maschinengestelles 1 ist eine rechteckige Oeffnung 77 vorhanden, durch welche das beim Sägen entstehende Sägemehl in einen Durchgangskanal 78 gelangt.

Die Fig. 5 zeigt die Seitenansicht teilweise im Schnitt des gemäss der Fig. 2 in die Oelleitung 52 eingesetzten Steuerventils 43, wobei das durch die Kolbenpumpe 39 geförderte Oel durch das Steuerventil 43 in den Antriebszylinder 22 gelangt. In der Ausgangsleitung 53 ist ein identisches Steuerventil 43' eingesetzt, so dass das aus dem Antriebszylinder 22 austretende Oel nur durch das Steuerventil 43' zurück in den Behälter 40 gelangt. Das Steuerventil 43 besitzt einen zylindrischen Mantel 79, auf dessen mit einem Gewinde versehenen Enden je ein Endstück 80 aufgeschraubt ist. Die Endstücke 80 gestatten, dass Oelleitungen an das Steuerventil 43 angeschlossen werden können. Im Innern des Mantels 79 ist ein rohrförmiger Kolben 81 entgegen der Rückführkraft einer Feder 82 verschiebbar angeordnet. Ein Ende des hohlen Kolbens 81 ist durch eine Stirnwand 83 verschlossen, deren Randbereich über den Kolben 81 radial nach aussen vorsteht. Eine sich vom Mantel 79 radial nach innen erstreckende Rippe 84 dient als Anschlag für den genannten Randbereich der Stirnwand 83 und als Auflage für die Feder 82.

Das der Stirnwand 83 gegenüberliegende Ende des hohlen Kolbens 81 ist abgesetzt und teilweise mit einem Aussengewinde 85 versehen. Ueber den abgesetzten Teil des Kolbens 81 ist ein Ring 86 aufgesetzt, an den das andere Ende der Feder 82 anliegt. Eine mit einem Innengewinde versehene Hülse 87 ist auf das Gewinde am abgesetzten Teil des Kolbens 81 aufgeschraubt und presst über einen Zwischenring 88 eine ringförmige Dichtung 89 gegen den Ring 86. Benachbart zur Stirnwand 83 ist im Kolbe 81 eine Bohrung 90 vorhanden, die in der in der Fig. 5 dargestellten Stellung des Kolbens 81 durch die Rippe 84 verschlossen ist.

Das von der Kolbenpumpe 39 stossweise geförderte Oel tritt, bezogen auf die Fig. 5, von unten her in das Steuerventil 43 ein, stösst dabei den Kolben 81 entgegen der Rückführkraft der Feder 82 nach oben, bis die Bohrung 90 durch die Rippe 84 nicht mehr verschlossen ist, tritt danach am oberen Ende des Steuerventils aus und gelangt über die Oelleitung 42 in den Antriebszylinder 22. Das dadurch aus dem Antriebszylinder 22 verdrängte Oel strömt durch die Ausgangsleitung 53 in das andere Steuerventil 43', weil das Rückschlagventil 59 geschlossen ist. Im Steuerventil 43' wird in ähnlicher Weise wie im Steuerventil 43 der hohle Kolben entgegen der Rückführkraft der Feder verschoben, so dass das vom Antriebszylinder 22 ausgestossene Oel durch das Steuerventil 43' hindurch zurück in den Behälter 40 gelangen kann.

Der Hub der Kolbenpumpe 39 kann beispielsweise durch Verändern des Abstandes zwischen dem Zentrum der Welle 33 und dem Zentrum des Lagers 36 so eingestellt sein, dass die pro Arbeitshub der Kolbenpumpe 39 geförderte Oelmenge ausreicht, um den Laufwagen 22 um 20 mm in Richtung zu den Sägeblättern 29 hin zu bewegen. Wenn der Kolben der Kolbenpumpe 39 den unteren Totpunkt erreicht, sinkt der Druck im Eingang, d.h. im unteren Teil des in der Fig. 5 dargestellten Steuerventils 43, und im Innern des Kolbens 81 ab, so dass der Kolben 81 durch die Feder 82 in seine in der Fig. 5 dargestellte Ausgangslage zurückkehrt. Dasselbe geschieht auch im Steuerventil 43'. Durch die Rückkehr des Kolbens 81 im Steuerventil 43' in seine Ausgangsstellung durch die Wirkung der Feder 82 im Steuerventil 43' wird ein Teil des Oels durch die Ausgangsleitung 53 wieder zurück in den Antriebszylinder 22 gepresst. Dies hat zur Folge, dass der Laufwagen 7 sich um eine kleine Strecke, z.B. 2 mm, zurückbewegt. Dabei wird das Holzstück 12 von den Sägeblättern 29 wegbewegt und diese können ungehindert in ihre obere Ausgangsstellung zurückverbracht werden.

Die oben beschriebene Vorschubvorrichtung umfasst im wesentlichen die von der Welle 33 angetriebene Kolbenpumpe 39, die beiden Steuerventile 43 und 43' sowie den Antriebszylinder 22. Mit dieser Vorschubvorrichtung wird der Vorschub des Laufwagens 7, d.h. die Geschwindigkeit der Bewegung des Holzstückes 12 in Richtung zu den Sägeblättern 29 hin, automatisch an die Geschwindigkeit der Sägeblätter 29 angepasst. Die Geschwindigkeit der durch die Schwungräder 72 und 72' angetriebenen Sägeblätter 29 nimmt ausgehend von ihrer oberen Stellung von 0 bis zu einem maximalen Wert zu, welcher nach einer Drehung von 90° der Schwungräder 72 und 72' erreicht wird, und sinkt danach wieder auf 0 ab, nachdem die Schwungräder sich um weitere 90° gedreht haben. Die Fördermenge der Kolbenpumpe 39 ist proportional zur Geschwindigkeit mit der sich die Sägeblätter 29 nach unten bewegen, weil der den Exzenter bildende Balken 34 durch die gleiche Welle 33 angetrieben wird, wie die Schwungräder 72 und 72'. Andererseits ist die Geschwindigkeit des durch den Antriebszylinder 22 angetriebenen Laufwagens 7 proportional zu der dem Antriebszylinder 22 pro Zeiteinheit zugeführten Oelmenge. Daraus folgt, dass die Geschwindigkeit, mit welcher das Holzstück 12 gegen die sich abwärts bewegenden Sägeblätter 29 bewegt wird, proportional zur Geschwindigkeit ist, mit der sich die Sägeblätter 29 nach unten bewegen.

Da die Kolbenpumpe 39 nur während der Abwärtsbewegung der Sägeblätter 29 Oel fördert, bewegt sich der Laufwagen 7 während der Aufwärtsbewegung der Sägeblätter 29 nicht auf die Sägeblätter 29 zu, sondern verharrt bis zum nächsten Abwärtsbewegen der Sägeblätter in der eingenommenen Stellung. Das heisst, bei einem

- 11 -   0090772

einfachen Ausführungsbeispiel der erfindungsgemässen Sägemaschine, können die Steuerzylinder 43 und 43' weggelassen werden.

Wenn eine völlig unbehinderte Aufwärtsbewegung der Sägeblätter 29 erreicht werden soll, so kann dies erreicht werden, indem das Steuerventil 43' in die Ausgangsleitung 53 des Antriebszylinders 22 eingesetzt wird. Wie oben beschrieben hat dies zur Folge, dass nach dem Ausführen des Arbeitshubes durch die Förderpumpe 39, d.h. nach einer Umdrehung der Schwungräder 72 und 72' um 180$^\circ$, ein Teil des in das Steuerventil 43' gelangten Oels durch die Feder 82 in dem Antriebszylinder 43' zurück in den Antriebszylinder 22 gedrängt wird, was eine Rückwärtsbewegung des Laufwagens 7 zur Folge hat. Das Ausmass der genannten Rückwärtsbewegung ist nicht genau definiert. Es können Abweichungen von einem Mittelwert von bis zu 50 % auftreten.

Zum Vermeiden des undefinierten Rückführweges, d.h. zum Rückführen des Laufwagens 7 um einen definierten Betrag, besitzt das bevorzugte Ausführungsbeispiel das weitere Steuerventil 43, das zwischen der Kolbenpumpe 39 und der Oelleitung 42 eingesetzt ist. Das Steuerventil 43 nimmt bei der Rückbewegung des Kolbens 81 in seine Ausgangsstellung genau soviel Oel auf, wie das Steuerventil 43' bei der Rückwärtsbewegung seines Kolbens 81 in die Ausgangsstellung abgibt. Somit ist die Strecke, um welche der Antriebszylinder 22 den Laufwagen 7 zurück verschiebt, genau definiert.

Bei der oben beschriebenen Holzsägemaschine wird das Holzstück 12 nur während der Abwärtsbewegung der Sägeblätter 29 und mit einer zur Geschwindigkeit der Sägeblätter proportionalen Geschwindigkeit gegen die Sägeblätter bewegt. Weiter wird das Holzstück 12 unmittelbar vor der Aufwärtsbewegung der Sägeblätter 29 etwas zurückbewegt, damit sich die Sägeblätter ungehindert nach oben bewegen können. Dadurch wird die Belastung der Sägeblätter 29 wesentlich verringert und

0090772

es können dünnere Sägeblätter, mit einer Dick von beispielsweise 1 mm, verwendet werden. Dieser Umstand ergibt eine Holzersparnis, die umso wichtiger ist, desto dünner die aus dem Holzstück 12 geschnittenen Bretter sind.

Das Verwenden von dünneren Sägeblättern ergibt auch wesentlich weniger Abfall in Form von Sägespänen. Darüberhinaus werden die Holzstücke mit wenig manuellem Aufwand auf der oben beschriebenen Holzsägemaschine eingespannt und die geschnittenen Bretter können auf bequeme Weise entfernt werden.

- 1 -

0090772

PATENTANSPRUECHE

1. Holzsägemaschine mit einem Laufwagen zum Aufnehmen eines zu sägenden Holzstückes, einem mehrere Sägeblätter aufweisenden Schnittgatter, das durch mittels eines Motors antreibbaren Schwungrädern und damit exzentrisch verbundenen Pleuelstangen auf und ab bewegbar ist, einer Spannvorrichtung zum Halten des Holzstückes auf dem Laufwagen und eine Vorschubvorrichtung zum Bewegen des Laufwagens in einer etwa senkrecht zur Bewegungsrichtung der Sägeblätter stehenden Richtung, dadurch gekennzeichnet, dass die Vorschubvorrichtungen eine Kolbenpumpe (39) und einen damit verbundenen hydraulischen Antriebszylinder (22) umfasst, dass der Kolben der Kolbenpumpe über eine Pleuelstange (37) und einen Exzenter (35) mit der Welle (33) der Schwungräder (72, 72') wirkverbunden ist und dass der Kolben des Antriebszylinders zum Bewegen des Laufwagens (7) in Abhängigkeit der relativen Geschwindigkeit der Abwärtsbewegung des Schnittgatters (28) gegenüber dem Laufwagen mit demselben über eine Kolbenstange (23) verbunden ist.

2. Maschine nach Anspruch 1, dadurch gekennzeichnet, dass zum Rückwärtsbewegen des Laufwagens um einen Bruchteil der Vorschubbewegung zu Beginn der Aufwärtsbewegung der Sägeblätter in der Ausgangsleitung (53) des Antriebszylinders (22) ein Steuerventil (43') angeordnet ist, dass das Steuerventil einen beweglichen Kolben (81), eine Feder (82) zum Verbringen des Kolbens in die Ruhestellung und einen in der Offenstellung des Steuerventils den Eingang und den Ausgang des Steuerventils verbindenden Durchtrittskanal (90) umfasst, dass in der Ruhestellung des Kolbens der Durchtrittskanal verschlossen ist, und dass der Durchtrittskanal erst freigegeben wird, wenn sich der Kolben um einen bestimmten Betrag entgegen der Wirkung der Rückführkraft der Feder verschoben hat.

3. Maschine nach Anspruch 2, dadurch gekennzeichnet, dass ein weiteres Steuerventil (43) zwischen dem Ausgang der Kolbenpumpe (39) und dem Eingang des Antriebszylinders (22) angeordnet ist und dass das weitere Steuerventil gleich ausgebildet ist wie das erstgenannte Steuerventil.

4. Maschine nach einem der vorangehenden Ansprüche, dadurch gekennzeichnet, dass die Spannvorrichtung einen zweiten hydraulischen Antriebszylinder (15) und eine durch einen Elektromotor (49) angetriebene Förderpumpe (49) umfasst, dass der zweite Antriebszylinder auf dem Laufwagen (7) montiert ist und dass am äusseren Ende der Kolbenstange (16) des zweiten Antriebszylinders ein kammförmiger Halter (19) zum Halten des zu sägenden Holzstückes angeordnet ist.

FIG. 1

FIG. 2

FIG. 3

FIG. 4

FIG. 5